# DEMANDE DE BREVET EUROPEEN

(11) **EP 1 174 031 A2**
(43) Date de publication de la demande: **23.01.2002**
(21) Numéro de dépôt: 00402530.0
(22) Date de dépôt: 13.09.2000
(51) Int. Cl.: A21C 1/14, B01F 13/04

(54) **Dispositif d'accès sécurisé pour mélangeur**

(30) Priorité: 20.07.2000 US 620559
(71) Demandeur: VMI, 85600 Montaigu (FR)
(72) Inventeur: Legoff, Didier, 44750 Campbon (FR); Vannier, Guillaume, 44100 Nantes (FR)
(74) Mandataire: Keib, Gérard

(57) **Abrégé**

Dispositif d'accès sécurisé pour un appareil de mélange, en particulier un pétrin (3) qui comprend une cuve (4) destinée à recevoir des ingrédients à mélanger, la cuve présentant une ouverture par laquelle sont introduits les aliments, ce dispositif d'accès comprenant :
- un capot (2) recouvrant au moins en partie l'ouverture, dans lequel est ménagée une fenêtre (11) autorisant un accès limité à la cuve et par laquelle peuvent être introduits les ingrédients
- des moyens d'obturation partielle (16,21) de la fenêtre (11),
caractérisé en ce que le capot (2) est monobloc, les moyens d'obturation (16) étant venus de matière avec le capot.

## Description

L'invention concerne un dispositif d'accès sécurisé pour un mélangeur, un appareil comprenant ce dispositif et son procédé de fabrication.

Plus particulièrement l'invention s'applique aux pétrins de boulangerie, notamment aux pétrins spirales.

On connaît déjà des dispositifs d'accès pour pétrins comprenant une trappe pour permettre l'incorporation d'ingrédients, la trappe logeant des barreaux espacés. Le capot est par exemple en matériau plastique, les barreaux sont métalliques en fils d'acier inoxydable rapportés collés dans la découpe par exemple en demi-lune.

Toutefois avec ce type de capot, les coûts de fabrication sont élevés, le niveau d'hygiène n'est pas toujours optimisé du fait de la présence de zones de rétention au niveau de la trappe, et la rigidité globale du capot n'est pas excellente.

L'invention à pour objet de palier les inconvénients de l'art antérieur, et de proposer un dispositif d'accès fiable, moins coûteux et améliorant l'hygiène.

A cet effet l'invention a pour objet selon un premier aspect un dispositif d'accès sécurisé pour un appareil de mélange, en particulier un pétrin qui comprend une cuve destinée à recevoir des ingrédients à mélanger, la cuve présentant une ouverture par laquelle sont introduits les aliments, ce dispositif d'accès comprenant :
- un capot recouvrant au moins en partie l'ouverture, dans lequel est ménagée une fenêtre autorisant un accès limité à la cuve et par laquelle peuvent être introduits les ingrédients
- des moyens d'obturation partielle de la fenêtre,
caractérisé en ce que le capot est monobloc, les moyens d'obturation étant venus de matière avec le capot.

Selon un mode de réalisation, les moyens d'obturation forment des barreaux à section en chevron en forme de V inversé, les deux pans inclinés du V étant dirigés vers la cuve, la pointe du V étant dirigée du côté opposé .

Selon un mode de réalisation, au moins les moyens d'obturation sont formés par thermoformage, le capot étant en matière plastique thermoformable.

Selon un autre mode de réalisation, les moyens d'obturation sont formés par emboutissage ou analogue, le capot étant en acier inoxydable.

Selon une réalisation, la fenêtre a une forme sensiblement de demi cercle, les barreaux s'étendant parallèlement entre eux, transversalement à la base du demi cercle, la hauteur de la fenêtre étant supérieure à la hauteur des barreaux.

Typiquement les barreaux sont régulièrement espacés, l'espace entre les barreaux étant de l'ordre de 20 mm à 30 mm.

Selon un mode de réalisation, les moyens d'obturation forment des barreaux tubulaires.

Selon un deuxième aspect l'invention concerne un appareil de mélange, plus particulièrement pétrin spirale, comprenant un dispositif d'accès sécurisé tel que décrit précédemment.

Selon un troisième aspect l'invention concerne un procédé de fabrication d'un capot comprenant un dispositif d'accès tel que décrit précédemment, comprenant une étape de thermoformage, d'emboutissage ou analogue des moyens d'obturation du capot dans le corps du capot.

D'autres objets et avantages de l'invention apparaîtront au cours de la description, description qui va être faite en référence aux dessins annexés illustrant un mode de réalisation, dessins dans lesquels :
- la figure 1 est une vue en perspective d'un capot de l'art antérieur ;
- la figure 2 est une vue en perspective d'un capot selon l'invention ;
- La figure 3 est une vue schématique d'un pétrin spirale utilisant le capot selon l'invention.

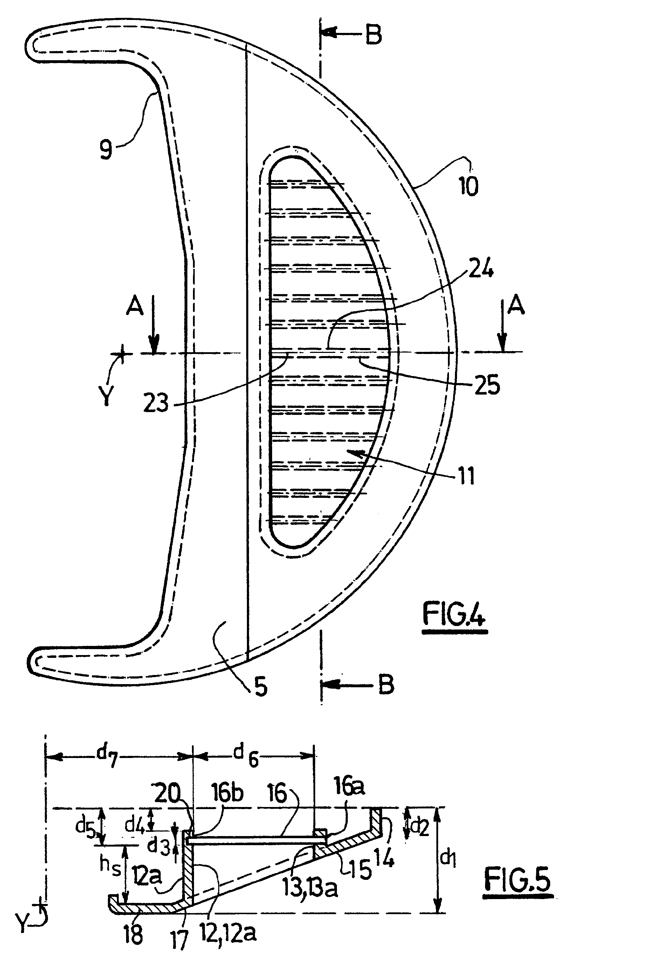

- la figure 4 est une vue de dessus du capot de la figure1 ;
- la figure 5 est une vue en coupe selon la ligne A-A de la figure 4 ;
- la figure 6 est une vue de dessus du capot de la figure 2 ;
- la figure 7 est une vue en coupe selon la ligne A-A de la figure 6 ;

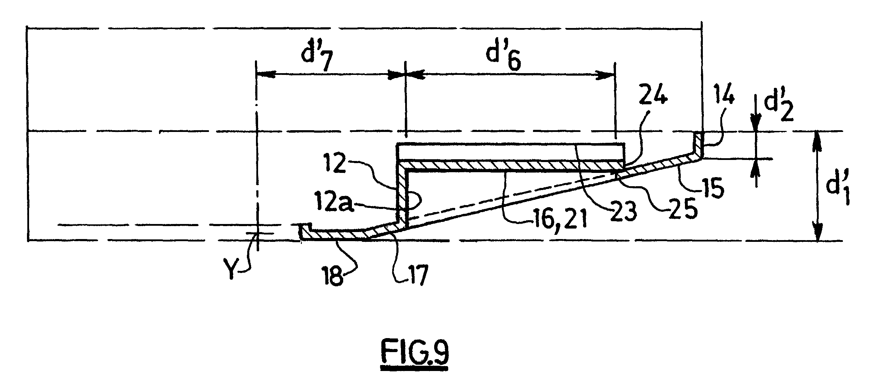

- la figure 8 est une vue en coupe selon la ligne B-B de la figure 6 ;
- la figure 9 est une vue en agrandissement de la figure 7.

Le dispositif d'accès sécurisé 1 appartient à un capot 2 d'un pétrin spirale 3 comportant une cuve 4 ouverte à sa partie supérieure 3a.

Le capot 2 comprend une zone 5 formant couvercle de la cuve 4. La zone 5 présente un espace 6 recevant le corps 7 de motorisation et l'outil de mélange 8.

La zone 5 est de forme générale arrondie, avec un bord axial 9 et un bord libre 10. La zone 5 est pleine sauf au niveau d'une ouverture ou fenêtre d'accès 11 en forme de demi cercle ou demi lune. Dans les réalisations représentées, la hauteur h1 du bord axial 12 ou base de l'ouverture ou fenêtre 11 est supérieure à la hauteur h2 décroissante vers le milieu du bord distal 13 de l'ouverture 11.

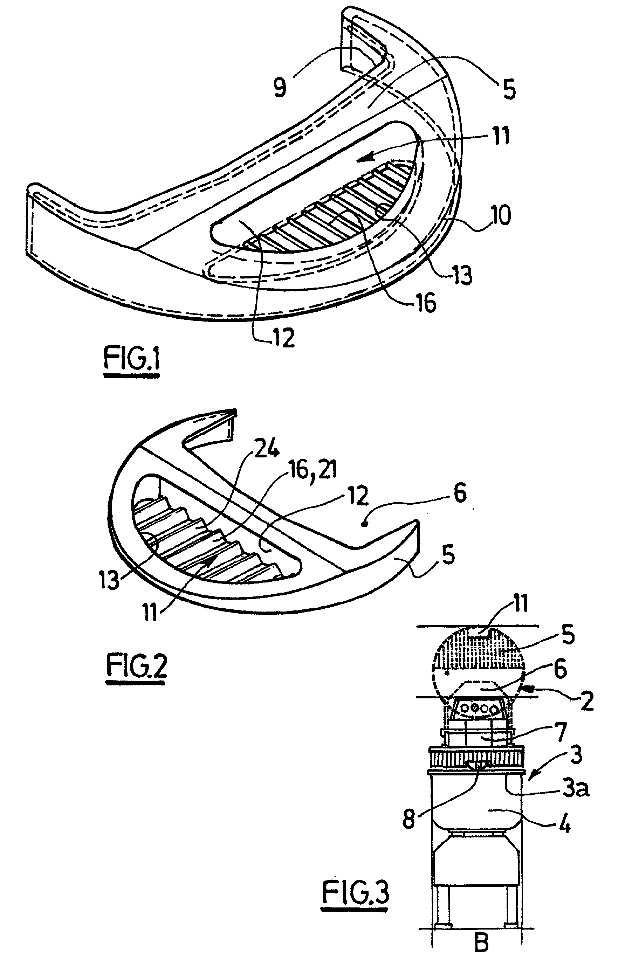

Dans les capots de l'art antérieur, le capot présente comme indiqué figure 3, du bord libre 10 vers l'axe Y du capot : un premier segment 14 vertical prolongé par un deuxième segment incliné 15, le bord libre 13 vertical, un barreau 16, le bord libre 12 vertical, un troisième segment 17 incliné prolongeant le segment 15, et un quatrième segment 18 horizontal. Le bord libre 13 présente une zone 19 de réception et de collage de la première extrémité 16a du barreau 16 sur la zone 5 du capot. Le bord libre 12 ménage en regard de la zone 19 un espace 20 pour recevoir l'autre extrémité 16b. Le barreau 16 est en acier inoxydable, les parties 12, 13, 14, 15, 17, 18 de la zone 5 sont en matériau plastique.

Par exemple les distances d1, d2, d3, d4, d5 sont respectivement 92mm, 25mm, 5mm, 20mm, 28mm. La distance d6 entre la paroi 13 a du bord libre 13 et la paroi 12a du bord libre 12 est de 105 mm . La distance d7 entre le bord libre 12 et l'axe Y vertical du capot est de 130mm.

Dans le capot selon l'invention, on retrouve les segments 14, 15, 17, 18. Par contre, le bord 13 ne comprend plus de zone 19 de réception et de collage, et le bord 12 ne comprend plus d'espace 20. Le barreau 16 est du même matériau, thermoformé avec le reste du capot, que la zone 5. Ainsi le barreau 16 forme un segment 21. L'extrémité 24 du segment 21 est située juste au dessus de l'extrémité 25 du segment 15. Les distances d'1, d'2, sont respectivement 100 mm et 27mm. Le bord 12 et le barreau 21 ne sont donc plus deux segments rapportés collés : le segment 21 est venu de matière avec le bord 12 d'une part et le segment 15 d'autre part.

Grâce au thermoformage, qui évite de rapporter les barreaux au capot plastique, la rigidité globale du capot est améliorée.

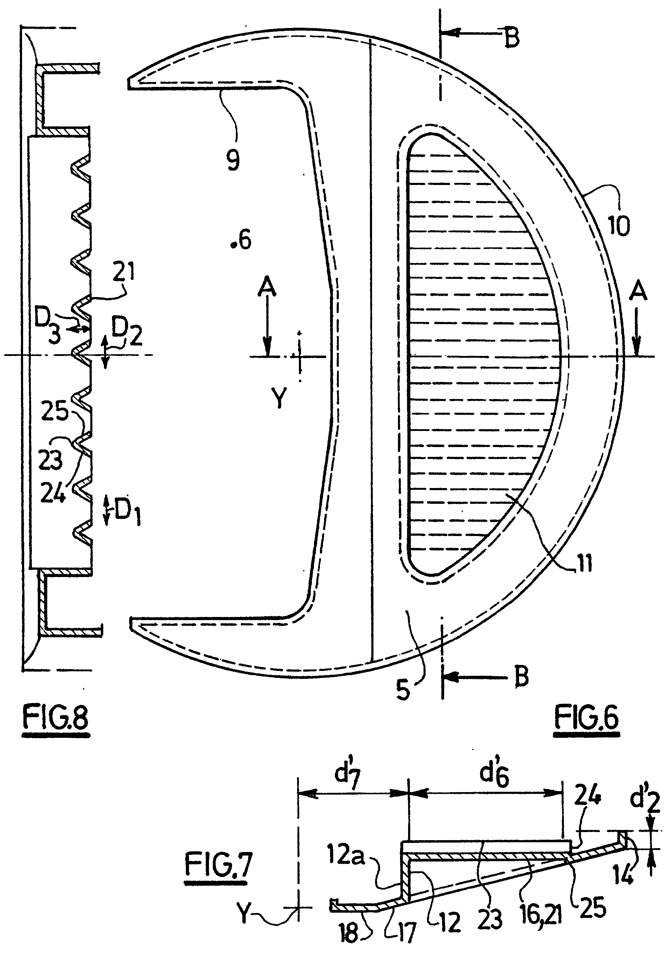

Le barreau 16 a désormais une forme de chevron 22. On a représenté en figure 7 par une ligne la pointe 23 du chevron. Chaque chevron comprend deux faces inclinées 24,25 reliées au niveau d'une pointe 23, la pointe 23 saillant vers le haut. On a représenté une réalisation avec les dimensions suivantes. La distance D1 entre deux chevrons est 25mm, la plus grande largeur d'un chevron étant D2=38mm. La hauteur D3 des chevrons est de 33 mm. La distance d'6 entre l'extrémité libre 25 du segment 15 et la paroi 12a du bord 12 est 210mm. La distance d'7 entre la paroi 12a du bord 12 et l'axe Y du capot est 148mm.

Grâce aux chevrons, on évite la rétention éventuelle de particules sur les barreaux 16, le niveau d'hygiène est optimisé.

On comprend que la structure du capot comprenant le dispositif d'accès sécurisé peut être très variée selon le reste de la machine (motorisation, forme de la cuve ...).

## Revendications

1. Dispositif d'accès sécurisé pour un appareil de mélange, en particulier un pétrin (3) qui comprend une cuve ( 4) destinée à recevoir des ingrédients à mélanger, la cuve présentant une ouverture par laquelle sont introduits les aliments, ce dispositif d'accès comprenant :
- un capot (2) recouvrant au moins en partie l'ouverture, dans lequel est ménagée une fenêtre (11) autorisant un accès limité à la cuve et par laquelle peuvent être introduits les ingrédients
- des moyens d'obturation partielle (16, 21) de la fenêtre (11),
**caractérisé en ce que** le capot (2) est monobloc, les moyens d'obturation (16) étant venus de matière avec le capot.

2. Dispositif d'accès selon la revendication 1 **caractérisé en ce que** les moyens d'obturation forment des barreaux (21) à section en chevron en forme de V inversé, les deux pans inclinés (24,25) du V étant dirigés vers la cuve, la pointe (23) du V étant dirigée du côté opposé .

3. Dispositif d'accès selon l'une quelconque des revendications 1 à 2 **caractérisé en ce que** au moins les moyens d'obturation (16) sont formés par thermoformage, le capot étant en matière plastique thermoformable.

4. Dispositif d'accès selon l'une quelconque des revendications 1 à 2 **caractérisé en ce que** les moyens d'obstruction sont formés par emboutissage ou analogue, le capot étant en acier inoxydable.

5. Dispositif d'accès selon l'une quelconque des revendications 1 à 4 **caractérisé en ce que** la fenêtre (11) a une forme sensiblement de demi cercle, les barreaux s'étendant parallèlement entre eux, transversalement à la base (12) du demi cercle, la hauteur de la fenêtre étant supérieure à la hauteur des barreaux.

6. Dispositif d'accès selon l'une quelconque des revendications 1 à 5 **caractérisé en ce que** les barreaux sont régulièrement espacés, l'espace entre les barreaux étant de l'ordre de 20 à 30 mm.

7. Dispositif d'accès selon la revendication 1 **caractérisé en ce que** les moyens d'obturation forment des barreaux tubulaires.

8. Appareil de mélange, plus particulièrement pétrin spirale, **caractérisé en ce qu'**il comprend un dispositif d'accès sécurisé selon l'une quelconque des revendications 1 à 7 .

9. Procédé de fabrication d'un capot comprenant un dispositif d'accès selon la revendication 3 ou 4, **caractérisé en ce qu'**il comprend une étape de thermoformage, d'emboutissage ou analogue des moyens d'obturation du capot dans le corps du capot.
